# EUROPÄISCHE PATENTSCHRIFT

(11) **EP 2 494 759 B1**
(45) Veröffentlichungstag und Bekanntmachung des Hinweises auf die Patenterteilung: **08.05.2019**
(21) Anmeldenummer: 10754447.0
(22) Anmeldetag: 02.09.2010
(51) Int. Cl.: H04L 29/06, G05B 19/418

(54) **VERFAHREN UND VORRICHTUNG ZUM SICHEREN ÜBERTRAGEN VON DATEN**
METHOD AND DEVICE FOR SECURELY TRANSMITTING DATA
PROCÉDÉ ET DISPOSITIF POUR LA TRANSMISSION SÉCURISÉE DE DONNÉES

(30) Priorität: 30.10.2009 DE 102009051383
(43) Veröffentlichungstag der Anmeldung: 05.09.2012
(73) Patentinhaber: Siemens Aktiengesellschaft, 80333 München (DE)
(72) Erfinder: FRIES, Steffen, 85598 Baldham (DE); SEEWALD, Maik, 90409 Nürnberg (DE)
(86) Internationale Anmeldenummer: PCT/EP2010/062833
(87) Internationale Veröffentlichungsnummer: WO 2011/051028

(56) Entgegenhaltungen:
- EP-A2- 2 066 142
- WO-A2-2005/047991
- US-A1- 2008 010 676
- US-B1- 7 055 173
- ENGLERT H ET AL: "IEC 61850 substation to control center communication - Status and practical experiences from projects" POWERTECH, 2009 IEEE BUCHAREST, IEEE, PISCATAWAY, NJ, USA, 28. Juni 2009 (2009-06-28), Seiten 1-6, XP031543195 ISBN: 978-1-4244-2234-0
- SUGWON HONG ET AL: "Evaluating Security Algorithms in the Substation Communication Architecture" SCALABLE COMPUTING AND COMMUNICATIONS; EIGHTH INTERNATIONAL CONFERENCE ON EMBEDDED COMPUTING, 2009. SCALCOM-EMBEDDEDCOM'09. INTERNATIONAL CONFERENCE ON, IEEE, PISCATAWAY, NJ, USA, 25. September 2009 (2009-09-25), Seiten 314-318, XP031571499 ISBN: 978-0-7695-3825-9
- NIAN LIU ET AL: "A security mechanism of Web Services-based communication for wind power plants" POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20. Juli 2008 (2008-07-20), Seiten 1-7, XP031303987 ISBN: 978-1-4244-1905-0
- CREVATIN M ET AL: "Security for Industrial Communication Systems" PROCEEDINGS OF THE IEEE, IEEE. NEW YORK, US LNKD- DOI:10.1109/JPROC.2005.849714, Bd. 93, Nr. 6, 1. Juni 2005 (2005-06-01), Seiten 1152-1177, XP011133109 ISSN: 0018-9219

## Beschreibung

Die vorliegende Erfindung betrifft ein Verfahren der Netzwerktechnik unter anderem zur Gewährleistung von Integritätsschutz und Vertraulichkeitsschutz von Daten und insbesondere ein Verfahren zum sicheren Übertragen von Daten. Die Erfindung betrifft ferner eine entsprechende Vorrichtung zur sicheren Übertragung von Daten, ein Computerprogrammprodukt, welches die Durchführung des Verfahrens zum sicheren Übertragen von Daten veranlasst sowie einen Datenspeicher der das Computerprogrammprodukt speichert.

In der modernen Kommunikationstechnik werden vermehrt vertrauliche Daten weltweit mittels Datenverbindungen über heterogene Netzwerke versendet. Hierbei ist es von besonderem Interesse, dass die Daten bezüglich ihrer Vollständigkeit sowie ihres Inhaltes geschützt sind. Ebenso soll sichergestellt werden, dass die Daten vertraulich übermittelt werden, das heißt, dass auf Senderseite ein Erhalt der Daten durch den korrekten Empfänger sowie auf Empfängerseite ein Übersenden der Daten durch den korrekten Absender gewährleistet ist.

Hierzu stellen herkömmliche Verfahren verschiedene Authentisierungsmöglichkeiten bereit. Der Vorgang einer Authentisierung ist generell der Vorgang eines Nachweisens einer Identität. Während dieses Vorgangs werden typischerweise Nachrichten zwischen einer Prüfeinheit und einem Gerät, welches zu authentisieren ist, ausgetauscht. Werden diese auszutauschenden Nachrichten von einem Angreifer abgehört, kann dieser Angreifer mittels der abgehörten Nachrichten eine falsche Identität vortäuschen. Die Authentisierung kann zum Beispiel dem zuverlässigen Erkennen eines Gerätes, zum Beispiel eines Sensors oder einer Batterie, dienen. Auch bei einer Client-Server-Kommunikation kann ein Überprüfen der Identität des Clients bzw. des Servers notwendig sein.

In herkömmlichen Verfahren erfolgt eine Authentisierung oft mittels eines Challenge-Response-Verfahrens. An das Gerät wird hierbei eine Challenge-Nachricht übertragen, welche zum Beispiel in Abhängigkeit einer Zufallszahl gebildet wird. Darauf berechnet das Gerät mittels eines geheimen kryptographischen Schlüssels einen zweiten Wert, der auch als Response-Nachricht bezeichnet wird. Diese Response-Nachricht wird an den Erzeuger der Challenge zurückgeschickt, der daraufhin die Response auf ihre Korrektheit hin überprüft. Da nur ein Originalprodukt, bzw. ein Originalgerät eine korrekte Response-Nachricht berechnen kann, kann somit ein Originalprodukt bzw. ein Originalgerät von einer Fälschung zuverlässig unterschieden werden.

Bei herkömmlichen Authentisierungsverfahren besteht oftmals die Notwendigkeit, ein Gerät nicht nur lokal, sondern auch entfernt über eine Kommunikationsstelle, zum Beispiel über Internet, Mobilfunk oder weitere Datenverbindungen, zu prüfen. Diese Notwendigkeit besteht insbesondere bei einer Fernwartung des Gerätes. Bei einem entfernten Überprüfen einer Identität entsteht oftmals das Problem, dass eine Zwischeninstanz Nachrichten auslesen und zur Vortäuschung einer falschen Identität verwenden kann. Dieses Angriffsszenario ist als Man-in-the-Middle Angriff bekannt.

Zum Transfer von Real-time-Prozessdaten und Kontrollinformationen zwischen Geräten und Applikationen ist das Manufacturing-Message-Specification-Protokoll, auch MMS genannt, bekannt. Im Rahmen der Automatisierungstechnologie, insbesondere bei einem Einsatz in der Energiebranche, kann MMS zur Steuerung von Feldgeräten eingesetzt werden. Hierbei kann MMS über verschiedene weitere Protokolle verwendet werden, zum Beispiel TCP/IP. Auf der Applikationsebene des MMS-Stacks wird das sogenannte ISO Association Control Service Element Protokoll, auch ACSE genannt, benutzt. ACSE kann zum Bespiel zur Etablierung von Application Associations zwischen den Application Entities verwendet werden und um die Identität und den Kontext dieser Assoziationen zu bestimmen. Hierbei ist eine Application Association als eine kooperative Beziehung zwischen zwei Application Entities definiert. Ein Kontext kann ein explizit definierter Satz von Application-Service-Elementen, auch ASE genannt, sein.

Bei einer Automatisierung in der Energietechnologie kann MMS zur Übermittlung von Kommandos direkt zwischen zwei Endpunkten verwendet werden, was im Folgenden als Fall 1 bezeichnet wird. Es gibt ebenso Szenarien, in denen MMS nicht in einer Peer-to-Peer Verbindung, also bei der nur ein Transportverbindungs-Hop vorhanden ist, übertragen sondern über mehrere Transportverbindungs-Hops, im Folgenden Fall 2 genannt, in denen zum Beispiel ein Substation Controller eingebunden ist. Die TCP/IP Verbindung kann auf den Transportverbindungs-Hops beispielsweise mittels TLS gesichert werden.

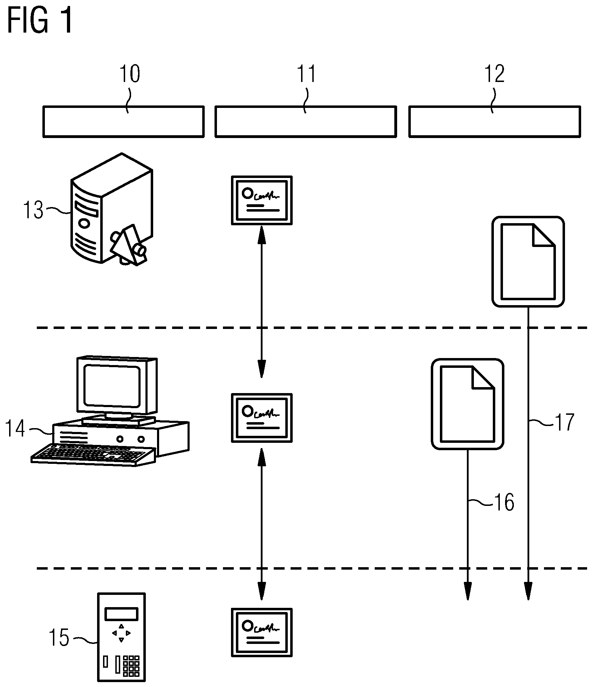

Figur 1 zeigt ein Übermitteln von Kommandos zwischen zwei Endpunkten gemäß einem herkömmlichen Verfahren. Hierbei sind in der vorliegenden Figur 1 Komponenten 10 vertikal angetragen. Es handelt sich hierbei um die Komponenten Kontrollzentrum 13, auch Control Center genannt, um einen Substations Controler 14, auch Substationskontrolleinheit genannt sowie um ein Feldgerät 15. Weiterhin sind vertikal Transportsicherheitsmechanismen 11 eingetragen. Hierbei handelt es sich beispielsweise um Zertifikate, welche in der vorliegenden Figur 1 vertikal unter den Transportsicherheitsmechanismen 11 angetragen sind. Weiterhin sind in der vorliegenden Figur 1 ein MMS-Nachrichtenfluss 12 dargestellt. Hierbei beschreibt der Pfeil 16 den Fall 1, in dem Kommandos direkt zwischen zwei Endpunkten verwendet werden. Der Pfeil 17 hingegen beschreibt den Fall 2, bei dem Kommandos mittels mehrerer Hops, auch Zwischenkomponenten genannt, übertragen werden.

Bezüglich eines Sicherheitsaspekts bietet MMS die Möglichkeit am Beginn einer Verbindung eine Authentisierung durchzuführen. Hier gibt es jedoch die Beschränkung, dass die Authentisierung nur zu Beginn einer Kommunikationsverbindung geschehen soll, es aber kein sicheres Application-Layer-Session-Konzept, auch Sitzungskonzept, gibt, welches sicherstellt, dass von Beginn bis zu einem Ende der Session dieselben Peers miteinander kommunizieren. Dies ist insbesondere bei Fall 2, gemäß Pfeil 17, wichtig, da im Fall 1, gemäß Pfeil 16, diese Anforderung durch die Nutzung von TLS sichergestellt werden kann. Hierbei sollte es einen Abgleich der auf Transportebene etablierten Sicherheitsverbindungen mit denen auf Applikationsebene geben.

Weiterhin kann eine rollenbasierte Zugriffskontrolle, auch Role-Based-Access-Control RBAC genannt, angewendet werden. Hierbei können Zertifikate und private Schlüssel genutzt werden.

Weiterhin ist von herkömmlichen Verfahren bekannt, dass MMS durch Definitionen in ISO-IEC 62351 die Möglichkeit einer Authentisierung der Peers unterstützt. Hierzu ist im Teil 4 dieser Norm folgendes als A-Profilsicherheit spezifiziert:
- Peer Entity Authentication
- AARQ
- AARE

Peer Entity Authentication bezeichnet hierbei eine Authentisierung von Kommunikationskomponenten, AARQ steht für Application Association Request, bzw. Applikationsassoziierungsanfrage und AARE steht für Application Association Response, bzw. Applikationsasoziierungsantwort Zur Authentisierung des Absenders kann in einer Peer Entity Authentication zum Beispiel der folgenden Quelltext Anwendung finden:

```
Authentication-value ::= CHOICE {
           charstring [0] IMPLICIT GraphicString,
          bitstring [1] IMPLICIT BIT STRING,
          external [2] IMPLICIT EXTERNAL,
           other [3] IMPLICIT SEQUENCE {
                other-mechanism-name MECHANISM-
          NAME.&id({ObjectSet}),
                other-mechanism-value MECHANISM-NAME.&Type
                }
           }
           STASE-MMS-Authentication-value {iso member-body
     usa(840) ansi-t1-259-1997(0)
           stase(1) stase-authentication-value(0) abstractSyn-
     tax(1) version1(1)}
           DEFINITIONS IMPLICIT TAGS ::= BEGIN
           -- EXPORTS everything
           IMPORTS
           SenderId, ReceiverId, Signature, SignatureCertifi-
           cate
           FROM ST-CMIP-PCI {iso member-body usa(840) ansi-tl-
           259-1997(0) stase(1) stasepci(1) abstractSyntax(4)
          version1(1)};
          MMS_Authentication-value ::= CHOICE{
                certificate-based [0] IMPLICIT SEQUENCE {
                     authentication-Certificate [0] IMPLICIT
                     &SignatureCertificate,
                     time [1] IMPLICIT GENERALZED-
                TIME,
                     signature [2] IMPLICIT
                     &SignedValue
                     },
                ...}
          END
```

Zu Beginn einer Verbindung werden AARQ und AARE Nachrichten zwischen Teilnehmern ausgetauscht, wobei kryptographische Daten transportiert werden. Unter anderem wird hier ein Zeitstempel signiert und in einem Fenster von 10 Minuten geprüft, ob ein entsprechender Zeitstempel nicht bereits empfangen wurde. Hierbei werden alle Nachrichten der Verbindung auf Applikationsebene nicht integritätsgeschützt.

Bekannt sind weiterhin verschiedene Verfahren, die die Authentisierung einer Nachricht oder mehrerer Nachrichten ermöglichen, wie zum Beispiel http Digest Authentication.

Ferner werden in herkömmlichen Verfahren Netzwerksicherheitsprotokolle verwendet, um IP-basierte Kommunikation kryptographisch zu schützen. Dabei erfolgt eine Authentisierung der Kommunikationspartner sowohl einseitig als auch gegenseitig. Oftmals verwendete Protokolle, die eine Authentisierung eines Kommunikationspartners vornehmen, sind als SSL, TLS oder IKE für IPsec bekannt. Die Authentisierung eines Kommunikationspartners, speziell eines http-Servers über SSL oder TLS erfolgt dabei mittels eines digitalen Zertifikats. Dieses Zertifikat enthält neben dem öffentlichen Schlüssel des Servers, auch Public-Key genannt, Information über den Server, insbesondere dessen Bezeichner, wie zum Beispiel ein Name, ein DNS-Name oder eine IP-Adresse.

Ebenfalls aus herkömmlichen Verfahren ist das Kerberos-Protokoll bekannt, mit dessen Hilfe Authentisierung und Autorisierung über eine dritte vertrauenswürdige Partei realisiert werden kann. Kerberos basiert auf der Benutzung von symmetrischen Schlüsseln.

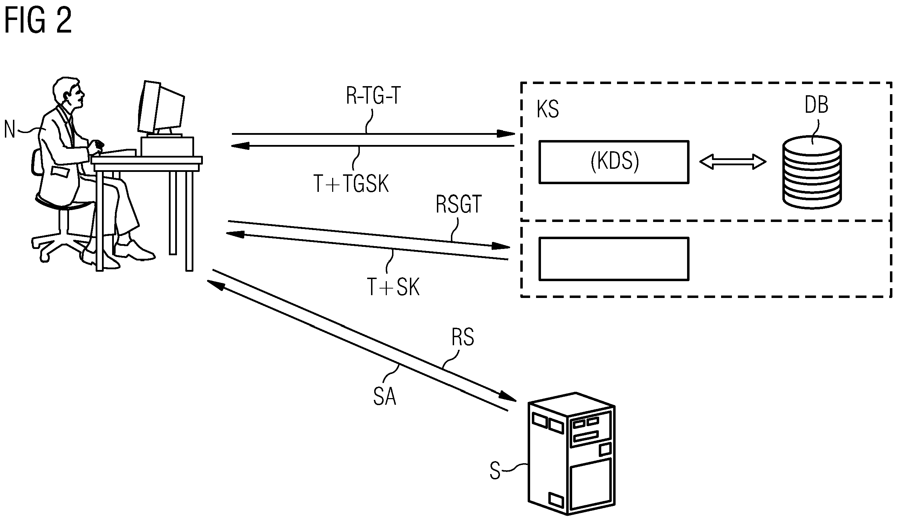

Figur 2 stellt den Authentifizierungsdienst Kerberos gemäß einem herkömmlichen Verfahren dar. Kerberos ist ein verteilter Authentifizierungsdienst bzw. ein Netzwerkprotokoll, das für offene und unsichere Computernetze, wie zum Beispiel dem Internet, entwickelt wurde. Die Authentifizierung übernimmt gemäß Kerberos eine vertrauenswürdige dritte Partei, zum Beispiel ein Kerberos-Server.

Gemäß dem in Figur 2 beschriebenen Kerberos-Verfahren beantragt ein Nutzer bzw. User N in einem ersten Schritt durch eine Anforderungsnachricht bzw. ein Request R-TG-T ein Ticket-Granting-Ticket mittels einer R-TG-T Nachricht von einem Kerberos-Server KS. Ein Ticket ist hierbei eine Berechtigungsnachricht, mit der der jeweilige Besitzer der Nachricht Zugriff auf den Server S bekommt. In einem darauffolgenden Schritt übermittelt der Kerberos-Server KS ein Ticket T und einen Ticket-Granting-Session-Key TGSK an den User N. Zum Übermitteln der beiden Nachrichten Ticket T und Ticket-Granting-Session-Key TGSK verfügt der Kerberos-Server KS über einen Key Distribution Service KDS. Dieser Schlüsselverteilungsdienst KDS kommuniziert mittels einer Datenverbindung mit einer Datenbank DB.

In einem darauffolgenden Verfahrensschritt beantragt der Nutzer N ein Service-Grant-Ticket SGT, wozu der Kerberos-Server KS auf einen Ticket-Granting-Server TGS zugreift. Daraufhin übermittelt der Ticket-Granting-Server TGS eine Ticket-Nachricht T sowie einen Session-Key SK an den Nutzer N. In Abhängigkeit der empfangenen Nachrichten erstellt der Nutzer N eine Request Service-Nachricht RS und übermittelt diese an einen weiteren Server S. In Abhängigkeit eines Überprüfens der Request Service-Nachricht RS übermittelt dieser Server S eine Server Authenticator-Nachricht an den Nutzer N.

Ein weiteres Beispiel für ein Netzwerkprotokoll gemäß einem herkömmlichen Verfahren ist SAML, das auch als Secure Assertion Mark-up Language bekannt ist. Im Unterschied zu Kerberos können in SAML auch asymmetrische Methoden genutzt werden.

Generell erfolgt in herkömmlichen Verfahren, zum Beispiel in dem MMS-Mechanismus, auf Anwendungsebene nur eine Authentisierung. Folglich stellen herkömmliche Verfahren keinen Integritätsschutz und Vertraulichkeitsschutz von Daten auf Anwendungsebene bereit. Punkt zu Punkt Verbindungen sind hierbei lediglich auf Transportebene gesichert. Herkömmliche Verfahren lehren keine Definition eines Session-Konzeptes für eine Informationssicherheit auf einer Applikationsebene, bzw. Anwendungsebene unter Nutzung von bereits existierenden Mechanismen.

Die WO 2005/047991 A2 zeigt ein Verfahren zur Wartung von Feldgeräten der Prozessautomatisierungstechnik mit einem Wartungsrechner eines Geräteherstellers.

Englert H ET AL: "IEC 61850 substation to control center communication - Status and practical experiences from projects" betrifft die Norm IEC 61850 als allgemeines Übertragungsprotokoll im Gebiet der Schutz- und Leittechnik von elektrischen Schaltanlagen. Durch die TCP/IP-Kommunikationsplattform der Norm IEC 61850 gilt das Übertragungsprotokoll als auch auf großflächige Kommunikationsebenen anwendbar. Es werden vor allem allgemeine Festlegungen für Schaltanlagen, die wichtigsten Information für Funktionen und Geräte, den Informationsaustausch für Schutz, Überwachung, Steuerung und Messung, eine digitale Schnittstelle für Primärdaten und eine Konfigurationssprache definiert.

Crevatin M ET AL: "Security for Industrial Communication Systems" gibt einen Überblick über IT Sicherheitsprobleme in industriellen Automationssystemen, welche auf offenen Kommunikationssystemen basieren.

EP 2 066 142 A2 betrifft die Konfiguration und das Routing in einem sog. MESH-Netzwerk, in dem sich die verfügbaren Routen dynamisch ändern können und z.B. Knoten entfallen können. Das verwendete Source Routing ermöglicht es Knoten in einem solchen Netzwerk den Pfad zum Empfänger anhand aktueller Gegebenheiten in dem Netzwerk selbst zu bestimmen.

US 2008/010676 A1 betrifft eine Vorrichtung um einen Zugang zu einem Server bereitzustellen, der innerhalb einer durch eine Firewall geschützten Umgebung arbeitet.

US 7 055 173 B1 offenbart ein Verfahren zum Schutz gegen Fehler in einer Firewall umfassend ein Zusammenwirken einer Anzahl an Firewalls, Detektieren eines Fehlers in einer der Firewalls und automatisches Senden der Pakete, die an die fehlerbehaftete Firewall adressiert waren, zu einer anderen Firewall.

Es ist eine Aufgabe der vorliegenden Erfindung ein Verfahren sowie eine Vorrichtung zum sicheren Übertagen von Daten bereitzustellen.

Diese Aufgabe wird mittels eines Verfahrens mit den Merkmalen des unabhängigen Patentanspruchs 1 zum sicheren Übertragen von Daten gelöst.

Ein Übertragen von Daten kann beispielsweise dann als sicher gelten, wenn es unter anderem integritätsgeschützt sowie vertraulichkeitsgeschützt ist. Daten können hierbei jegliche Art von Informationseinheiten, wie sie beispielsweise im Internet ausgetauscht werden, umfassen. Daten können auch paketweise bzw. partitioniert übermittelt werden. Hierbei können Daten digital und/oder analog moduliert werden. Folglich kann es sich bei den Daten auch um Signale, welche übermittelt werden, handeln.

Das Bereitstellen einer Datenverbindung kann beispielsweise mittels einer Routingtabelle, einem Methodenaufruf, einem entfernten Methodenaufruf und/oder generell mit einem Nachrichtenaustausch durchgeführt werden. Es ist auch möglich, Datenverbindungen mittels eines Auslesens von Datenverbindungen aus einem Datenspeicher bereitzustellen. Folglich kann es sich bei einem Bereitstellen von Datenverbindungen um ein Benennen eines Datenpfades wie auch um das Herstellen einer Datenleitung zwischen zwei Komponenten handeln. Eine Datenverbindung kann beispielsweise zwischen einem Control Center, einem Substationscontroler und/oder einem Feldgerät bereitgestellt werden. Beispielsweise kann eine Datenverbindung zwischen einer Startkomponente und einer Zwischenkomponente sowie zwischen einer Zwischenkomponente und einer Zielkomponente bereitgestellt werden. Folglich erfolgt auf physischer Ebene ein Bereistellen von zwei Datenverbindungen, wobei logischer Weise eine Datenverbindung zwischen einer Startkomponente und einer Zielkomponente bereitgestellt wird.

Die unterschiedlichen Startkomponenten, die mindestens eine Zwischenkomponente sowie die gemeinsame Zielkomponente aufweisen können aus mindestens einer weitere Komponente geformt sein, wobei eine Komponente als ein technisches Gerät, ein Bauelement, eine Rechneranlage, ein Netzwerkgerät, eine Softwareeinheit, ein Softwaremodul, eine Softwareklasse, ein Softwarepackage und/oder einer Vielzahl weiterer Komponenten vorliegen kann. Insbesondere kann mindestens eine Startkomponente als ein Control Center bzw. Kontrollzentrum, eine Zwischenkomponente als ein Substation Controler bzw. Substationssteuereinheit und/oder eine Zielkomponente als ein Feldgerät vorliegen. In Abhängigkeit der Ausprägung der Startkomponente, der Zwischenkomponente und/oder der Zielkomponente kann eine entsprechende Datenverbindung gewählt werden. In einem mobilen Anwendungsszenario kann es sich beispielsweise bei der Datenverbindung über eine drahtlose Verbindung, welche über eine Luftschnittstelle implementiert ist, handeln. Ferner ist es möglich, dass die Datenverbindung weitere Komponenten, als lediglich die Startkomponente, die Zwischenkomponente und/oder die Zielkomponente, aufweist.

Ein Zusammenfassen der Zwischenkomponenten in Abhängigkeit einer kryptographischen Information zu einer Zwischenkomponente kann zum Beispiel eines Sitzungsprotokolls umgesetzt werden. Demgemäß ist es nicht notwendig, bei einem mehrfachen Übertragen von Daten von einer Startkomponente über eine Zwischenkomponente zu einer Zielkomponente jeweils eine gesonderte Datenverbindung zwischen der Zwischenkomponente und der Zielkomponente herzustellen. Gemäß einem Aspekt der vorliegenden Erfindung ist es vorteilhaft, für jede Übertragung von Daten jeweils eine Transportverbindung zwischen der Startkomponente und der Zwischenkomponente bereitzustellen, wobei jedoch auch bei einer Vielzahl von Datenübertragungen von der Zwischenkomponente zu der Zielkomponente lediglich genau eine Datenverbindung bereitgestellt werden muss. Folglich wird es gemäß einem Aspekt der vorliegenden Erfindung vermieden, eine Vielzahl von Datenverbindungen zwischen der Zwischenkomponente und einer Zielkomponente herzustellen. Folglich ermöglicht ein Zusammenfassen der Zwischenkomponenten zu einer Zwischenkomponente gemäß eines Sitzungsprotokolls, dass lediglich ein einmaliges Authentisieren der Zwischenkomponente bzw. der Zielkomponente erforderlich ist.

Ferner ist ein Zusammenfassen der Zwischenkomponenten zu einer Zwischenkomponente mittels eines Routings möglich. Hierbei ist es möglich, aus der Vielzahl von Zwischenkomponenten genau eine auszuwählen und diese ausgewählte Zwischenkomponente mittels der Netzwerkadressen der jeweils anderen Zwischenkomponenten, welche nicht ausgewählt wurden, anzusprechen. Folglich erfolgt ein Übermitteln von Daten der unterschiedlichen Startkomponenten nicht an mehrere Zwischenkomponenten sondern an genau eine ausgewählte Zwischenkomponente, wobei die eine ausgewählte Zwischenkomponente eine Datenverbindung mit der einen gemeinsamen Zielkomponente aufbaut.

Ein Durchführen eines Routings kann zum Beispiel ein Umleiten von Datenpaketen, ein Zuweisen neuer Netzwerkadressen an Zwischenkomponenten, und/oder ein Aktualisieren einer Routingtabelle umfassen.

Das Zusammenfassen der Zwischenkomponenten kann in Abhängigkeit der kryptographischen Information durchgeführt werden. Das Bereitstellen der kryptographischen Information kann zum Beispiel gemäß herkömmlicher Verfahren wie dem Challenge-Response-Verfahren erfolgen. Zum Bereitstellen der kryptographischen Information kann es vorteilhaft sein, ein entsprechendes Datenformat derart anzupassen, dass es geeignet ist, die kryptographische Information zu kodieren. Folglich können Daten, welche gemäß diesem angepassten Datenformat vorliegen, die kryptographische Information bereitstellen.

Ein Erzeugen der kryptographischen Information kann durch eine Startkomponente erfolgen. Hierbei ist es vorteilhaft, die kryptographische Information zum Beispiel mittels des Challenge-Response-Verfahrens zu erzeugen. Das verwendete Challenge-Response-Verfahren kann hierbei auch durch weitere kryptographische Verfahren ergänzt bzw. angepasst werden. Bei der kryptographischen Information kann es sich um ein generiertes Token und/oder um eine Nonce-Information handeln. Eine Nonce-Information ist geeignet eine Zufallszahl und/oder ein Pseudozufallszahl bereitzustellen. Ferner kann es sich bei der kryptographischen Zahl auch um eine Prüfsumme handeln. Zur Kapselung der kryptographischen Information sowie weiterer Daten, welche zu übertragen sind, eignet sich eine Erweiterung des MMS-Datenformats. Dem Fachmann sind hierbei eine Vielzahl weiterer möglicher Datenformate bekannt, welche sich in geeigneter Weise anpassen lassen.

Ein Übertragen der Daten von der Startkomponente über die zusammengefasste Zwischenkomponente zu der Zielkomponente ist geeignet, in sicherer Weise die Daten unter Schutz der Integrität und der Vertraulichkeit zu übermitteln. Mittels des Übertragens über die zusammengefasste Zwischenkomponente ist gemäß einem Aspekt der vorliegenden Erfindung die Anzahl der Zwischenkomponenten auf genau eine Zwischenkomponente begrenzt. Folglich wird zum Beispiel der erläuterte Man-in-the-Middle-Angriff auf die Datenverbindung zwischen der Zwischenkomponente und der gemeinsamen Zielkomponente erschwert.

Somit wird ein Verfahren vorgestellt, welches ein kryptographisch gesichertes Sitzungskonzept auf Applikationsebene bereitstellt. Hierdurch ist die Zuordnung von verschiedenen Kontexten über dieselbe Transportverbindung ermöglicht. Eine einmal etablierte Datenverbindung, zum Beispiel eine TLS-Verbindung, kann für verschiedene Sitzungen auf Applikationsebene genutzt werden. Dies ist insbesondere für Multi-Hop-Szenarien vorteilhaft. Ein Hop bezeichnet hierbei ein Übertragen von Daten von einer Komponente zu einer nächsten Komponente auf Transportebene. Auch bei Single-Hop-Szenarien ist das Verfahren vorteilhaft, falls mehrere Applikationen oder mehrere Nutzer von einem Gerät mit einem weiteren Gerät kommunizieren und dabei nur eine einzelne Transportverbindung zum Beispiel eine TLS-Transportverbindung nutzen.

Ferner ist eine Definition von universellen kryptographischen Informationen ermöglicht, was eine Einführung von weiteren Sicherheitsdiensten begünstigt. Insbesondere hybride kryptographische Verfahren bieten hier einen Ausgangspunkt, da schon asymmetrisches Schlüsselmaterial zur Authentisierung verwendet wird. Hierbei ist ein schrittweiser Übergang von einem symmetrischen Schutz über einen hybriden Schutz bis hin zu komplett asymmetrischen Schutz gemäß einem Aspekt der vorliegenden Erfindung realisierbar. Der hybride Ansatz hat insbesondere beim Aufsetzen von Sicherheitsbeziehungen Vorteile, da er die statische Administration von paarweise gemeinsamen Geheimnissen vermeidet und diese dynamisch zu Sitzungsbeginn aushandelt.

In einer Ausführungsform des Verfahrens gemäß der vorliegenden Erfindung sind die unterschiedlichen Startkomponenten, die Zwischenkomponenten und/oder die Zielkomponenten in einem Automatisierungsnetz vorgesehen.

Dies hat den Vorteil, dass mittels dem bereitgestelltem Verfahren eine Übertragung von Daten in Automatisierungsnetzen durchgeführt werden kann. Automatisierungsnetze finden bei einer Vielzahl von technischen Gebieten Anwendung, insbesondere in der Energiebranche, zum Beispiel beim Betreiben von Kraftwerken.

In einer weiteren Ausführungsform des Verfahrens gemäß der vorliegenden Erfindung wird das Übertragen der Daten mittels eines erweiterten Multimedia-Messaging-Service-Protokolls durchgeführt.

Dies hat den Vorteil, dass eine bereits existierende Technologie und folglich bereits implementierte Infrastrukturen wiederverwendet werden können.

In einer weiteren Ausführungsform des Verfahrens gemäß der vorliegenden Erfindung wird das Zusammenfassen der Zwischenkomponenten und/oder das Übertragen der Daten mittels mindestens eines Nachrichtenaustausches durchgeführt.

Dies hat den Vorteil, dass mittels des Nachrichtenaustausches ein Zusammenfassen in Abhängigkeit von kryptographischer Information gemäß einem Sitzungsprotokoll und/oder ein Aushandeln welche Zwischenkomponenten zusammengefasst werden sollen, durchgeführt werden kann.

In einer weiteren Ausführungsform des Verfahrens gemäß der vorliegenden Erfindung wird der Nachrichtenaustausch zwischen den unterschiedlichen Startkomponenten, den Zwischenkomponenten und/oder der Zielkomponente durchgeführt.

Dies hat den Vorteil, dass eine Vielzahl von Komponenten in dynamischer Weise miteinander kommunizieren kann.

In einer weiteren Ausführungsform des Verfahrens gemäß der vorliegenden Erfindung implementiert der Nachrichtenaustausch mindestens ein symmetrisches und/oder ein asymmetrisches Kryptographieverfahren.

Dies hat den Vorteil, dass bereits bekannte Technologien zur Umsetzung des erfindungsgemäßen Verfahrens wiederverwendet werden können.

Ferner ist ein Anwenden einer Mehrzahl von Kryptographieverfahren möglich, welche symmetrisch, asymmetrisch oder hybrid sein können.

In einer weiteren Ausführungsform des Verfahrens gemäß der vorliegenden Erfindung wird der Nachrichtenaustausch gemäß einem Shared-Key-Verfahren, einem http-Digest-Authentication-Verfahren, einem Challenge-Response-Verfahren, einem Keyed-Hash-Verfahren, einer Hash-Funktion, einem Diffie-Hellman-Verfahren und/oder einem digitalem Signatur-Verfahren durchgeführt.

Dies hat den Vorteil, dass eine Vielzahl von Verfahren zur Umsetzung des erfindungsgemäßen Verfahrens angewendet werden kann. Insbesondere erlauben die vorgenannten Verfahren, eine sichere Datenübertragung auf Anwendungsebene.

In einer weiteren Ausführungsform des Verfahrens gemäß der vorliegenden Erfindung weist mindestens eine ausgetauschte Nachricht einen Hinweis auf eine Nonce-Information, eine Zufallszahl, eine Pseudozufallszahl, einen Befehl, eine Identität eines Absenders, eine Identität eines Empfängers, einen Zeitstempel und/oder eine Sequenznummer auf.

Die hat den Vorteil, dass z. B. ein Next-Nonce-Verfahren implemtiert werden kann, welches es erlaubt den Inhalt einer übertragenen Nachricht an eine vorhergehende Nachricht mittels einer Nonce-Information zu binden. Ferner können mittels der ausgetauschten Nachrichten eine Vielzahl von Sitzungsprotokollen implementiert werden.

In einer weiteren Ausführungsform des Verfahrens gemäß der vorliegenden Erfindung weist mindestens eine ausgetauschte Nachricht die kryptographische Information auf.

Dies hat den Vorteil, dass die kryptographische Information zur Implementierung von Kryptographie Verfahren, zum Beispiel ein Austausch von Schlüsseln, zwischen den einzelnen Komponenten ausgetauscht werden kann.

In einer weiteren Ausführungsform des Verfahrens gemäß der vorliegenden Erfindung weist mindestens eine ausgetauschte Nachricht eine Prüfsumme auf.

Dies hat den Vorteil, dass der Inhalt der ausgetauschten Nachrichten bezüglich der Integrität der Nachricht überprüft werden kann.

In einer weiteren Ausführungsform des Verfahrens gemäß der vorliegenden Erfindung wird der Nachrichtenaustausch in Abhängigkeit eines Verschlüsselungsprotokolls ausgeführt.

Dies hat den Vorteil, dass die Nachrichten in verschlüsselter Weise ausgetauscht werden können. Ferner können bereits umgesetzte Infrastrukturen, welche gemäß einem bestimmten Verschlüsselungsprotokoll agieren, weiterverwendet werden.

In einer weiteren Ausführungsform des Verfahrens gemäß der vorliegenden Erfindung wird das Zusammenfassen der Zwischenkomponenten mittels mindestens eines Routings, eines Zuweisens von Netzwerkadressen, eines Anwendens eines Sitzungsprotokolls, eines Aufbauens einer gesicherten Datenverbindung, eines Übermittelns eines Befehls, eines Übermittelns einer kryptographischen Information und/oder eines Übermittelns einer Bestätigungsnachricht durchgeführt.

Dies hat den Vorteil, dass das Zusammenfassen der Zwischenkomponenten mittels einer Vielzahl von Vorgehensweisen, und insbesondere mittels einer Kombination einer Vielzahl von Vorgehensweisen, durchgeführt werden kann.

Das Zusammenfassen der Zwischenkomponenten wird auf Anwendungsebene durchgeführt.

Dies hat den Vorteil, dass unter anderem ein Integritätsschutz unabhängig von der Transportebene umgesetzt werden kann.

Die Aufgabe wird ferner durch eine Vorrichtung zur sicheren Übertragung von Daten mit den Merkmalen des unabhängigen Patentanspruchs 12 gelöst.

Weitere vorteilhafte Ausgestaltungen der Erfindung sind Gegenstand der Unteransprüche sowie der im Folgenden beschriebnen Ausführungsbeispiele. Im Weiteren wird die Erfindung anhand beispielhafter Implementierungen unter Bezugnahmen auf die beigelegten Figuren näher erläutert.

Es zeigt dabei:
- Figur 1: ein Übermitteln von Kommandos zwischen zwei Endpunkten gemäß einem herkömmlichen Verfahren;
- Figure 2: einen Authentifizierungsdienst gemäß einem herkömmlichen Verfahren;
- Figur 3: ein Aktivitätsdiagramm einer Ausführungsform eines Verfahrens zum sicheren Übertragen von Daten gemäß der vorliegenden Erfindung;
- Figur 4: ein detailliertes Aktivitätsdiagramm einer Ausführungsform eines Verfahrens zum sicheren Übertragen von Daten gemäß der vorliegenden Erfindung;
- Figur 5: ein Blockdiagramm einer Ausführungsform einer Vorrichtung zur sicheren Übertragung von Daten gemäß der vorliegenden Erfindung;
- Figur 6: ein Flussdiagramm einer Ausführungsform eines Verfahrens zum sicheren Übertragen von Daten gemäß der vorliegenden Erfindung;
- Figur 7: ein Sequenzdiagramm einer Ausführungsform eines Verfahrens zum sicheren Übertragen von Daten gemäß der vorliegenden Erfindung;
- Figur 8: ein Sequenzdiagramm einer weiteren Ausführungsform eines Verfahrens zum sicheren Übertragen von Daten gemäß der vorliegenden Erfindung;
- Figur 9: ein Sequenzdiagramm einer weiteren Ausführungsform eines Verfahrens zum sicheren Übertragen von Daten gemäß der vorliegenden Erfindung;
- Figur 10: ein Sequenzdiagramm einer weiteren Ausführungsform eines Verfahrens zum sicheren Übertragen von Daten gemäß der vorliegenden Erfindung;
- Figur 11: ein Nachrichtenaufbau einer Nachricht, wie sie in einer Ausführungsform des Verfahrens zum sicheren Übertragen von Daten gemäß der vorliegenden Erfindung Anwendung finden kann; und
- Figur 12: ein schematischer Aufbau einer kryptographischen Information, wie er in einer Ausführungsform eines Verfahrens zum sicheren Übertragen von Daten gemäß der vorliegenden Erfindung Anwendung finden kann.

In den Figuren sind gleiche bzw. funktionsgleiche Elemente mit den gleichen Bezugszeichen versehen, sofern nichts anderes angegeben ist.

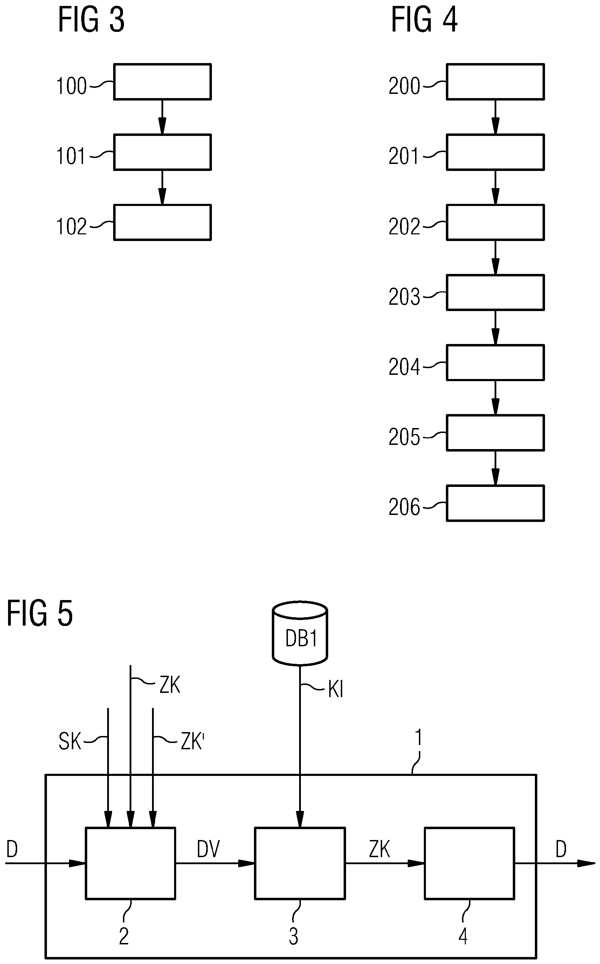

Figur 3 zeigt ein Aktivitätsdiagramm einer Ausführungsform eines Verfahrens zum sicheren Übertragen von Daten gemäß der vorliegenden Erfindung. Das Verfahren weist die folgenden Schritte auf:
Bereitstellen 100 von Datenverbindungen von unterschiedlichen Startkomponenten über jeweils mindestens eine Zwischenkomponente zu einer gemeinsamen Zielkomponente;
Zusammenfassen 101 der Zwischenkomponenten in Abhängigkeit einer kryptographischen Information zu einer Zwischenkomponente; und
Übertragen 102 der Daten von den Startkomponenten über die zusammengefasste Zwischenkomponente zu der Zielkomponente.

Die vorbeschriebenen Verfahrensschritte können iterativ und/oder in anderer Reihenfolge ausgeführt werden.

Figur 4 beschreibt ein detailliertes Aktivitätsdiagramm eines Verfahrens zum sicheren Übertragen gemäß einer Ausführungsform der vorliegenden Erfindung.

In einem ersten Verfahrensschritt 200 erfolgt ein Identifizieren von unterschiedlichen Startkomponenten, mindestens einer Zwischenkomponente und einer gemeinsamen Zielkomponente.

Somit erfolgt in dem ersten Verfahrensschritt 200 ein Auswählen derjenigen Komponenten, welche mittels einer Datenverbindung untereinander kommunizieren, das heißt Daten austauschen, sollen. Ein Identifizieren der kommunizierenden Komponenten kann auch implizit, mittels eines Methodenaufrufs von einer Komponente zu einer weiteren Komponente durchgeführt werden. Zum Beispiel ruft eine Kontrolleinrichtung mittels eines entfernten Methodenaufrufs eine Funktion eines Feldgerätes ab, wodurch festgelegt ist, dass die Kontrolleinrichtung mit dem Feldgerät mittels einer logischen Datenverbindung kommunizieren soll. Auf physischer Ebene wird nunmehr identifiziert, dass der Methodenaufruf der Kontrolleinheit über eine Substation bzw. eine Zwischenkomponente geleitet werden muss. Folglich wurde in dem Verfahrensschritt 200 eine Startkomponente, nämlich eine Kontrolleinheit, eine Zwischenkomponente, nämlich eine Substation-Einheit sowie ein Feldgerät identifiziert.

In einem darauffolgenden Verfahrensschritt 201 erfolgt ein Aufbauen einer Verbindung zwischen der im Verfahrensschritt 200 identifizierten Startkomponente, der Zwischenkomponente und der Zielkomponente. Der Verfahrensschritt 201 kann zum Beispiel das Aufbauen einer TLS-Sitzung aufweisen. Ein Aufbauen einer TLS-Sitzung kann hierbei das Austauschen mehrerer Nachrichten von unterschiedlichen Startkomponenten zu der mindestens einen Zwischenkomponente sowie von der Zwischenkomponente zu der gemeinsamen Zielkomponente umfassen. Folglich ist nach einem Durchführen des Verfahrensschrittes 201 eine logische Verbindung zwischen der Startkomponente und der Zielkomponente bereitgestellt.

In einem weiteren Verfahrensschritt 202 erfolgt ein Übermitteln eines Befehls von der Startkomponente zu der Zielkomponente. Hierbei kann zum Beispiel ein Steuerbefehl von der Startkomponente an die Zielkomponente übermittelt werden.

Im vorliegenden Ausführungsbeispiel findet das erfindungsgemäße Verfahren in einem Automatisierungsnetz der Energietechnologie Anwendung. Bei der Startkomponente handelt es sich daher um eine Steuereinheit, welche ein Feldgerät, welches zum Beispiel in einem Kraftwerk vorgesehen ist, ansteuert. Im vorliegenden Ausführungsbeispiel wird in dem Verfahrensschritt 201 der Befehl "Schließe Stromkreis" an das Feldgerät übermittelt. Folglich übergibt die Steuereinheit dem Feldgerät einen Parameter, der anzeigt, dass das Steuergerät einen Stromkreis schließen soll. Alternativ erfolgt in dem Verfahrensschritt 202 ein entfernter Methodenaufruf von der Steuereinheit an das Feldgerät.

In einem darauffolgenden Verfahrensschritt 203 übermittelt das Feldgerät eine sogenannte Challenge an die Kontrolleinheit. Eine Challenge stellt hierbei eine Anfragenachricht dar, welche zum Beispiel mittels einem Challenge-Response-Verfahren generiert wird.

In einem darauffolgenden Verfahrensschritt 204 generiert die Kontrolleinheit eine entsprechende Response-Nachricht, welche zum Beispiel mittels einem Challenge-Response-Verfahren generiert wird. Die berechnete Response-Nachricht kann zusammen mit dem Befehl an das Feldgerät übermittelt werden. Folglich wird dem Feldgerät mitgeteilt, dass sich eine bestimmte generierte Response auf einen bestimmten Befehl bezieht. Das Feldgerät erkennt somit, um welche Response es sich handelt, da die Kontrolleinheit eine Vielzahl von Kontrollnachrichten bezüglich unterschiedlicher Befehle übermitteln kann und/oder weil eine Vielzahl von Startkomponenten jeweils mindestens eine Response bezüglich eines bestimmten Befehls übermitteln.

In Verfahrensschritt 205 erfolgt ein Überprüfen der übermittelten Response-Nachricht, sowie bei einem Vergleichen der übermittelten Response-Nachricht, welches ergibt, dass die übermittelte Response-Nachricht mit einer erwarteten Response-Nachricht übereinstimmt, ein Ausführen des übermittelten Befehls. Ferner erfolgt in dem Verfahrensschritt 205 ein Bestätigen des Ausführens des Befehls mittels einer Bestätigungsnachricht sowie ein Übermitteln einer weiteren kryptographischen Information von der Zielkomponente an die Startkomponente. Hierbei ist es möglich, dass das Übermitteln der kryptographischen Information in dem Verfahrensschritt 205 eine sogenannte "Next Challenge" bzw. eine "Next Nonce" Information aufweist. Hierdurch ist es möglich, in einem weiteren Übermitteln von Daten von der Startkomponente an die Zielkomponente die Verfahrensschritte 203 und/oder 204 nicht mehr auszuführen, da dieses mittels eines iterativen Ausführens der Verfahrensschritte 204 und/oder 205 durchgeführt werden kann. Ferner ist es möglich, in jedem der Verfahrensschritte 202, 203, 204 und 205 weitere Parameter, das heißt weitere Befehle, weitere Challenge-Nachrichten, weitere Response-Nachrichten und/oder weitere Bestätigungsnachrichten zu übermitteln. Die übermittelte kryptographische Information kann zum Beispiel auch ein Cryptotoken aufweisen.

In einer weiteren Ausführungsform des Verfahrens zum sicheren Übertragen von Daten gemäß der vorliegenden Erfindung erfolgt ein iteratives Ausführen der Verfahrensschritte 202 und/oder 203. Zum Beispiel kann in einem Verfahrensschritt 202 ein Befehl und kryptographische Information von der Startkomponente an die Zielkomponente übermittelt werden, und in einem Verfahrensschritt 203 eine Bestätigungsnachricht und eine weitere kryptographische Information von der Zielkomponente an die Startkomponente übermittelt werden. Folglich kann in einem wiederholten Ausführen des Verfahrensschrittes 202 ein neuer Befehl, mitsamt einer neuen kryptographischen Information von der Startkomponente an die Zielkomponente übermittelt werden. Daraufhin erfolgt wiederum in Verfahrensschritt 203 ein Übermitteln einer Bestätigungsnachricht mit einer weiteren kryptographischen Information.

In einem letzten, optionalen Verfahrensschritt 206 erfolgt ein Überprüfen, ob weitere Daten zur Übermittlung von der Startkomponente an die Zielkomponente vorliegen. Wird in dem Verfahrensschritt 206 festgestellt, dass weitere Daten zur Übertragung vorliegen, so wird in einer der bereits durchgeführten Verfahrensschritte 202, 203, 204 oder 205 verzweigt. Die beschriebenen Verfahrensschritte können weitere Unterschritte enthalten sowie iterativ und/oder in anderer Reihenfolge ausgeführt werden.

Fig. 5 beschreibt eine Vorrichtung 1 zur sicheren Übertragung von Daten D gemäß einer Ausführungsform der vorliegenden Erfindung. Die Vorrichtung 1 zur sicheren Übertragung von Daten D umfasst:
eine Bereitstellungseinheit 2 zum Bereitstellen von Datenverbindungen DV von unterschiedlichen Startkomponenten SK über jeweils mindestens eine Zwischenkomponente ZK zu einer gemeinsamen Zielkomponente ZK';
eine Zusammenfassungseinheit 13 zum Zusammenfassen der Zwischenkomponente ZK in Abhängigkeit einer kryptographischen Information KI zu einer Zwischenkomponente ZK; und
eine Übertragungseinheit 4 zum Übertragen der D von den Startkomponenten SK über die zusammengefasste Zwischenkomponente ZK zu der Zielkomponente ZK'.

Im Folgenden werden weitere Merkmale einer weiteren Ausführungsform der Vorrichtung 1 zur sicheren Übertragung von Daten D aufgezeigt, welche lediglich in dieser weiteren Ausführungsform vorgesehen sein können. Folglich handelt es sich hierbei um optionale Merkmale.

Im vorliegenden Ausführungsbeispiel liest die Einstellungseinheit 2 die unterschiedlichen Startkomponenten SK, die mindestens eine Zwischenkomponente ZK sowie die gemeinsame Zielkomponente ZK' aus dem Datenspeicher aus. Hierbei ist es auch möglich, dass die Bereitstellungseinheit 2 die Startkomponenten SK, die Zwischenkomponenten ZK sowie die gemeinsame Zielkomponente ZK' von einer weiteren Einheit bereitgestellt bekommt. Ferner wird der Bereitstellungseinheit 2 eine Datenmenge bereitgestellt, aus der eine Auswahl an Daten D an die Zielkomponente ZK' übermittelt werden soll. Die Bereitstellungseinheit 2 kann zum Beispiel anhand der übermittelten Startkomponenten SK, Zwischenkomponenten ZK und/oder Zielkomponenten ZK' Datenverbindungen DV identifizieren, über welche Datenverbindung DV die Daten D übertragen werden sollen. Bei den Datenverbindungen DV kann es sich hierbei um logische, physische und/oder hybride Datenverbindungen DV handeln.

Die Zusammenfassungseinheit 3 ist geeignet, mehrere Zwischenkomponenten ZK in Abhängigkeit einer kryptographischen Information KI zu einer Zwischenkomponente ZK zusammenzufassen. Hierzu ist es möglich, dass der Zusammenfassungseinheit 3 mindestens eine kryptographische Information KI bereitgestellt wird. Das Bereitstellen der kryptographischen Information KI kann zum Beispiel durch Errechnen und/oder durch Auslesen aus einem Datenspeicher DB1 erfolgen. Wurde die Zwischeneinheit ZK ausgewählt, so kann diese an die Übertragungseinheit 4 übermittelt werden. Daraufhin kann die Übertragungseinheit 4 ein Übertragen der Daten D veranlassen.

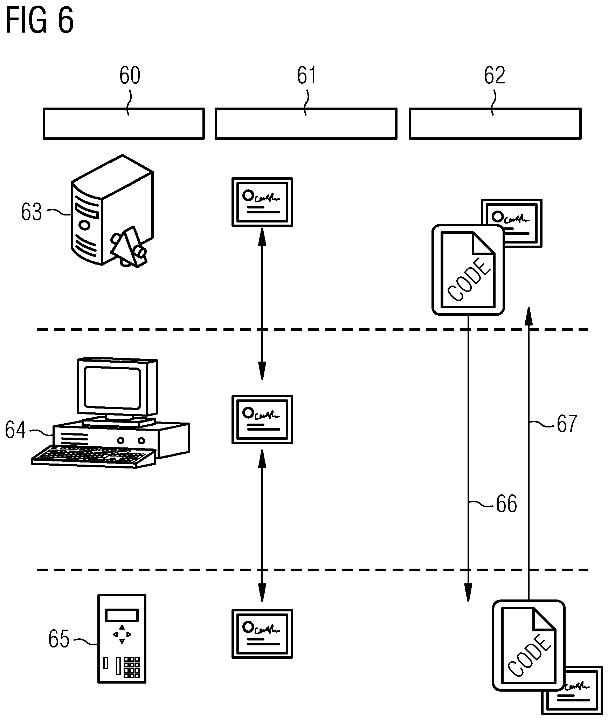

Fig. 6 beschreibt ein Flussdiagramm gemäß einem Verfahren zum sicheren Übertragen von Daten gemäß einer Ausführungsform der vorliegenden Erfindung. In der vorliegenden Fig. 6 sind vertikal mehrere Komponenten 60 eingetragen, zum Beispiel eine Kontrolleinheit 63, eine Substation-Kontrolleinheit 64 sowie ein Feldgerät 65. Zum Übertragen von Daten erfolgt auf einer Transportsicherheitsschicht 61 eine Anwendung des TLS-Protokolls mit gegenseitiger Authentifizierung auf einer Hopzu-Hop-Basis unter Verwendung von Zertifikaten. Auf Anwendungsebene erfolgt ein Fluss von MMS Nachrichten 62.

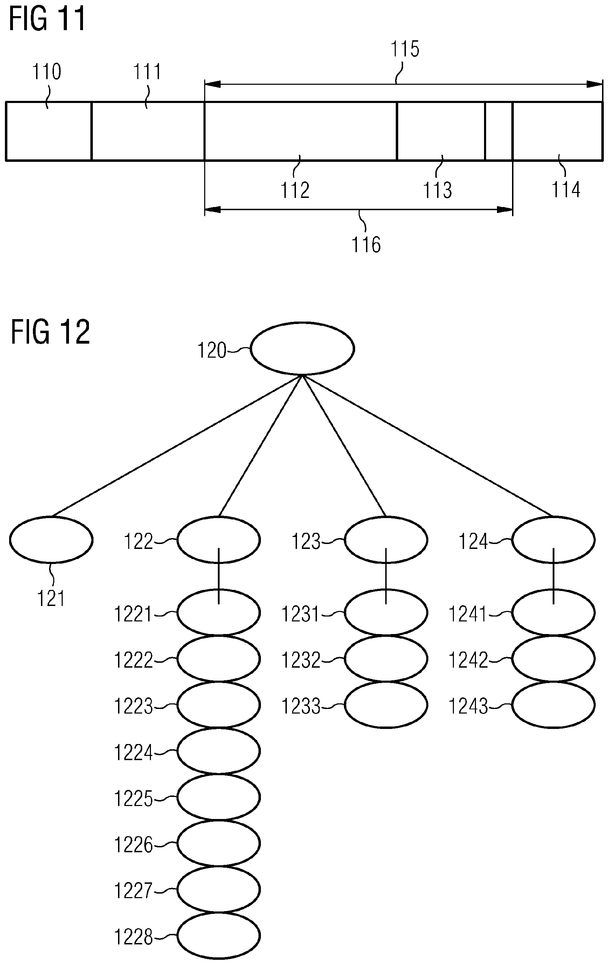

Im Vergleich zu dem Ausführungsbeispiel gemäß Figur 1 erfolgt im Ausführungsbeispiel gemäß der vorliegenden Figur 6 ein Nachrichtenaustausch mittels der Kontrolleinheit 63 und dem Feldgerät 65. Bei der Kontrolleinheit 63 kann es sich zum Beispiel um mindestens eine Startkomponente SK handeln und bei dem Feldgerät 65 kann es sich zum Beispiel um eine Zielkomponente ZK' handeln. Der Nachrichtenaustausch kann zum Beispiel mittels eines MMS Handshakes unter Verwendung von AARQ und/oder AARE Nachrichten gemäß der MMS Spezifikation folgen. Hierbei kann ein Diffie-Hellman-Verfahren angewendet werden. Die einzelnen Nachrichten, welche zwischen der Startkomponente 63 und der Zielkomponente 65 ausgetauscht werden, können mit einer digitalen Signatur geschützt werden. Hierbei kann zum Beispiel eine AARQ Nachricht um ein Cryptotoken erweitert werden. Ein beispielhafter Aufbau eines Cryptotokens ist in Figur 12 dargestellt. Ein weiterer Nachrichtenaustausch kann mittels AARE Nachrichten erfolgen, welche ebenfalls um ein Cryptotoken erweitert sein können. Der Nachrichtenaustausch von der Startkomponente 63 zu der Zielkomponente 65 ist in der vorliegenden Figur 6 mittels eines Pfeils 66 gekennzeichnet. Ein Nachrichtenaustausch von der Zielkomponente 65 zu der Startkomponente 63 ist in der vorliegenden Figur 6 mittels eines Pfeils 67 gekennzeichnet.

In der vorliegenden Ausführungsform, gemäß Figur 6 wird erfindungsgemäß ein Nachrichtenaustausch zwischen der Startkomponente 63 und der Zielkomponente 65 implementiert, wobei ein Nachrichtenaustausch, wie er zum Beispiel in der Figur 1, mittels der Pfeile 16 und 17 gekennzeichnet ist, nicht notwendig ist. Somit erfolgt auf Anwendungsebene ein erfindungsgemäßes Einrichten einer Sitzung, auch Session genannt, direkt zwischen zwei kommunizierenden End-zu-End-Verbindungen. Die Wahrscheinlichkeit eines Man-in-the-Middle Angriffs, wie er gemäß Fig. 1 möglich ist, ist somit mittels des erfindungsgemäßen Verfahrens minimiert.

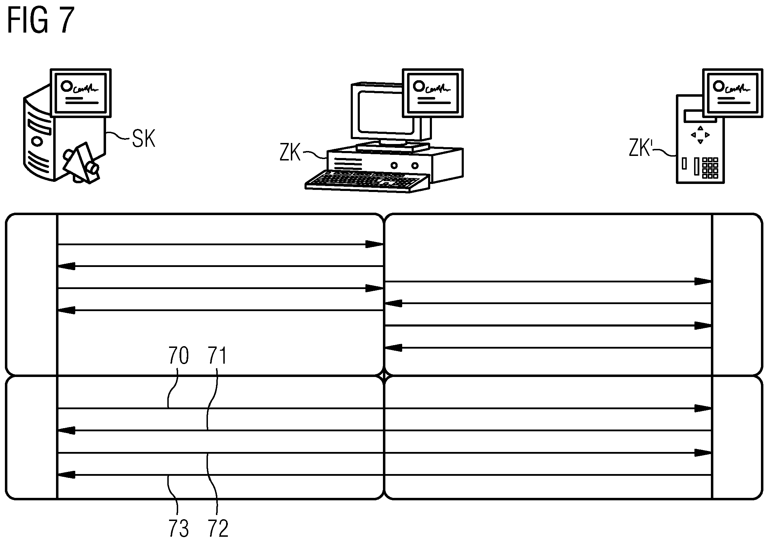

Fig. 7 zeigt ein Sequenzdiagramm eines Verfahrens zum sicheren Übertragen von Daten gemäß einer Ausführungsform der vorliegenden Erfindung. In der vorliegenden Fig. 7 erfolgt das Übermitteln der Daten von mindestens einer Startkomponente SK, über eine Zwischenkomponente ZK zu einem Feldgerät ZK' auf physischer Ebene. Hierzu wird eine Verbindung auf Transportschicht, zum Beispiel mittels einer TLS-Sitzung TLSS hergestellt. Dies erfolgt mittels eines mehrfachen Austauschens von Nachrichten zwischen mindestens einer der Startkomponenten SK, mindestens einer Zwischenkomponente ZK und der gemeinsamen Zielkomponente ZK'. Im vorliegenden Ausführungsbeispiel gemäß der Fig. 7 erfolgt ein Nachrichtenaustausch 70, der gemäß dem MMS Protokoll wie folgt beschrieben werden kann:
AARQ PDU1 (command)

Bei einer AARQ Nachricht handelt es sich um eine Application-Association-Request-Nachricht. PDU kann zum Beispiel für Protocol Data Unit stehen, wie dies aus der Netzwerktechnik bekannt ist. Bei dem Befehl "command" kann es sich um eine Arbeitsanweisung an das Feldgerät ZK' handeln. In einer weiteren Nachricht 71 fordert die Zielkomponente ZK' von der Startkomponente SK eine Response mittels eines Übersendens einer Challenge Nachricht an. Gemäß dem MMS Protokoll kann dies wie folgt beschrieben werden:
AARE PDU2 (challenge)

Hierbei steht AARE für eine Application-Association-Response-Nachricht. Zum Berechnen der Challenge, also der Anfragenachricht, kann durch die Zielkomponente ZK' mittels einem Challenge-Response-Verfahren durchgeführt werden. Daraufhin rechnet die Startkomponente SK bezüglich des in der Nachricht 70 übermittelten Befehls eine Response-Nachricht, und übersendet diese in der Nachricht 72 zurück an die Zielkomponente ZK'. Die Zielkomponente ZK' prüft nunmehr die Response und führt in Abhängigkeit des Überprüfens der Response den übermittelten Befehl "command" aus. Die Nachricht 72 kann gemäß dem MMS Protokoll zum Beispiel wie folgt beschrieben:
AARQ PDU3 (command (PDU1), response)

Da die Zielkomponente ZK' den übermittelten Befehl "command" ausgeführt hat, übermittelt die Zielkomponente ZK' eine Bestätigungsnachricht, auch Acknowledgement ACK genannt, zusammen mit einer weiteren Challenge, auch noch Nonce-Nachricht genannt, an die Startkomponente SK. Diese Nachricht 73 kann gemäß dem MMS Protokoll wie folgt beschrieben werden:
AARE PDU4 (ACK, Next Nonce).

Anstatt bei einem erneuten Übersenden der Daten wiederholt die Verfahrensschritte 70, 71, 72 und/oder 73 auszuführen, kann nunmehr in der Ausführungsform der vorliegenden Erfindung erneut die Nachricht 72 übersendet werden, wobei sich nunmehr die Response auf die in der vorher übermittelten Nachricht 73 übermittelten Next Nonce bezieht. Somit erfolgt ein erneutes Authentisieren des Befehls Command. Gemäß der Nonce-Information erfolgt ein Binden an die jeweils vorhergehende Nachricht. Somit ist ein Session-Konzept umgesetzt, welches es erlaubt, eine kryptographische Verkettung der Nachrichten auf Anwendungsebene bereitzustellen. Darüber hinaus kann die Berechnung der Response auch die eigentliche Response Nachricht enthalten, so dass eine Integritätsschutz der Nachrichten realisiert werden kann.

In einer weiteren Ausführungsform des Verfahrens zum sicheren Übermitteln von Daten erfolgt eine Nutzung des Ansatzes von HTTP Digest Authentication, bei dem der Server eine Challenge sendet und der Client die zugehörige Response berechnet. Zusätzlich kann hier ein Next-Nonce-Mechanismus genutzt werden, um ein Aufdoppeln aller Anfragenachrichten zu vermeiden. Mittels des Next-Nonce-Mechanismusses würde nur der erste Handshake aufgedoppelt werden, alle weiteren Antworten von der Serverseite würden die Challenge über die letzte Response erhalten. Dieser Ansatz geht von einem symmetrischen Geheimnis ausgehen, mit dem die Nachrichten dann integritätsgeschützt werden können.

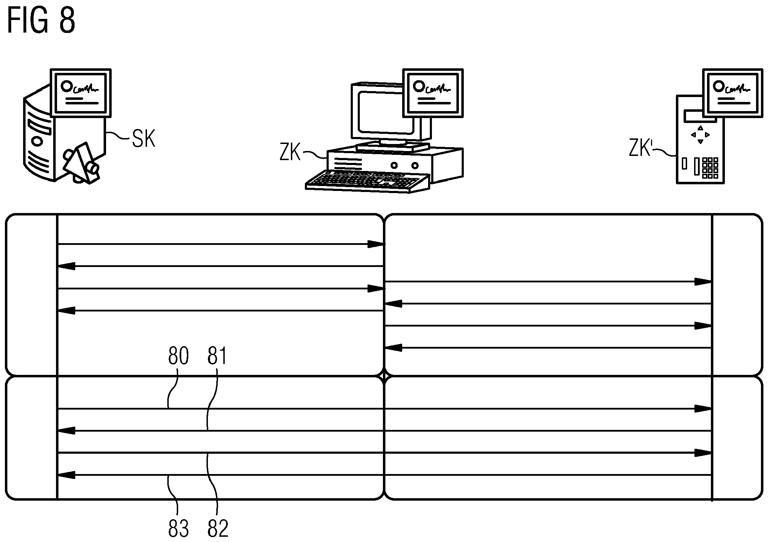

Figur 8 beschreibt ein Sequenzdiagramm einer weiteren Ausführungsform des Verfahrens zur sicheren Übertragung von Daten gemäß der vorliegenden Erfindung. Bei dem MMS Protokoll kann es sich im Folgenden um ein erweitertes MMS Protokoll handeln. Die Startkomponente SK übermittelt eine Nachricht an die Zielkomponente ZK', was gemäß dem MMS Protokoll wie folgt beschrieben werden kann:
AARQ PDU1 (command, cryptotoken)

Im vorliegenden Ausführungsbeispiel enthält das Cryptotoken eine Prüfsumme, die mittels der Startkomponente SK generiert wurde. Entspricht das übermittelte Cryptotoken einem erwarteten Cryptotoken, so übermittelt die Zielkomponente ZK eine Bestätigungsnachricht mitsamt dem Cryptotoken. Dies kann gemäß dem MMS Protokoll wie folgt beschrieben werden:
AARE PDU2 (ACK, cryptotoken)

Folglich hat die Zielkomponente ZK' bestätigt, dass die Integrität der übermittelten Nachricht 80 gewährleistet ist. Sollen wiederholt Daten von der Startkomponente SK an die Zielkomponente ZK' übermittelt werden, so erfolgt ein weiteres Übermitteln der Nachricht 82, welche gemäß dem MMS Protokoll wie folgt dargestellt werden kann:
AARQ PDU3 (command, cryptotoken)

Wurde der Befehl "command" gemäß der übermittelten Nachricht 82 von der Zielkomponente ZK' ausgeführt, so erfolgt ein Bestätigen und erneutes Übermitteln des Cryptotokens von der Zielkomponente ZK' an die Startkomponente SK. Dies kann gemäß dem MMS Protokoll wie folgt beschrieben werden:
AARE PDU4 (ACK, Cryptotoken)

Alternativ zu dem erneuten Übermitteln der Nachrichten 82 und 83 kann auch ein iteratives Senden der Nachrichten 80 und 81 erfolgen.

In einer weiteren Ausführungsform des Verfahrens zum sicheren Übertragen von Daten gemäß der vorliegenden Erfindung erfolgt eine Nutzung eines rein symmetrischen Ansatzes analog zu dem H.235.1 Verfahren. Das H.235.1 Verfahren ist ein herkömmliches Verfahren, welches in einer Echtzeitkommunikation Einsatz findet. In der vorliegenden Ausführungsform kann in allen Nachrichten die Identität des Absenders und Empfängers, sowie der Zeitstempel und die Sequenznummer ergänzt werden. Dieser Ansatz geht von einem symmetrischen Geheimnis aus, mit dem die Nachrichten integritätsgeschützt werden können. Für den Integritätsschutz kann hier ein keyed Hash (HMAC) Verfahren mit aktuellen Hash Funktionen wie zum Beispiel SHA-256, SHA-512 und weitere eingesetzt werden.

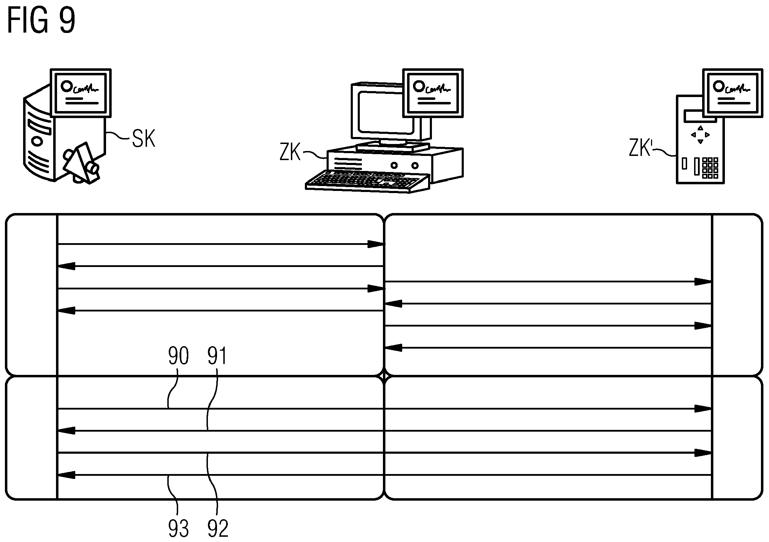

Figur 9 beschreibt ein Sequenzdiagramm einer Ausführungsform eines Verfahrens zum sicheren Übertragen von Daten. Hierzu folgt in einem ersten Nachrichtenaustausch ein Übermitteln der Nachricht 90, welche gemäß dem MMS Protokoll wie folgt dargestellt werden kann:
AARQ PDU1 (command, cryptotoken, signed)

Diese Ausführungsform unterscheidet sich von der in Figur 8 gezeigten Ausführungsform dadurch, dass eine digitale Signatur verwendet werden kann. Hierbei ist es jedoch erforderlich, dass eine Verifikation der Signatur erfolgt. Besonders vorteilhaft ist bei der Ausführungsform, gemäß Figur 9, dass kein symmetrisches Geheimnis benötigt wird. Die digitale Signatur kann zum Beispiel mittels des Parameters "signed" der Nachricht 90 von der Startkomponente SK an die Zielkomponente ZK' übermittelt werden.

Daraufhin erfolgt ein Übersenden der Nachricht 91 von der Zielkomponente ZK' an die Startkomponente SK, welche gemäß dem MMS Protokoll wie folgt dargestellt werden kann:
AARE PDU2 (ACK, cryptotoken, signed)

Folglich bestätigt die Zielkomponente ZK', dass die übermittelte Nachricht, aufweisend den Befehl, das Cryptotoken und die Signatur erfolgreich empfangen wurde. Sollen nunmehr weitere Daten von der Startkomponente SK an die Zielkomponente ZK' übermittelt werden, so erfolgt ein Übermitteln der Nachrichten 92, welche gemäß dem MMS Protokoll wie folgt dargestellt werden kann:
AARQ PDU3 (command, cryptotoken, signed)
sowie Nachricht 93, welche gemäß dem MMS Protokoll wie folgt dargestellt werden:
AARE PDU4 (ACK, cryptotoken, signed)

Alternativ zu dem Übermitteln der Nachrichten 92 und 93 kann ein erneutes Senden der Nachrichten 90 und 91 veranlasst werden.

In einer weiteren Ausführungsform des Verfahrens zum sicheren Übertragen von Daten gemäß der vorliegenden Erfindung erfolgt ein Nutzen eines rein asymmetrischen Ansatzes analog zu H.235.2, wobei H.235.2 ein herkömmliches Verfahren der Kommunikationstechnik darstellt. In dieser Ausführungsform kann in allen Nachrichten die Identität des Absenders und Empfängers, sowie der Zeitstempel und die Sequenznummer ergänzt werden. Dieser Ansatz geht von einem asymmetrischen Schlüsselpaar aus, mit dem die Nachrichten dann integritätsgeschützt werden können. Für den Integritätsschutz kann hier eine digitale Signatur, zum Beispiel RSA, elliptische Kurven und weitere, eingesetzt werden. Durch die Signatur jeder Nachricht kann eine Non-Repudiation als Sicherheitsdienst realisiert werden, der für die Unterstützung von rollenbasierten Zugriffsverfahren eine Anforderung sein kann.

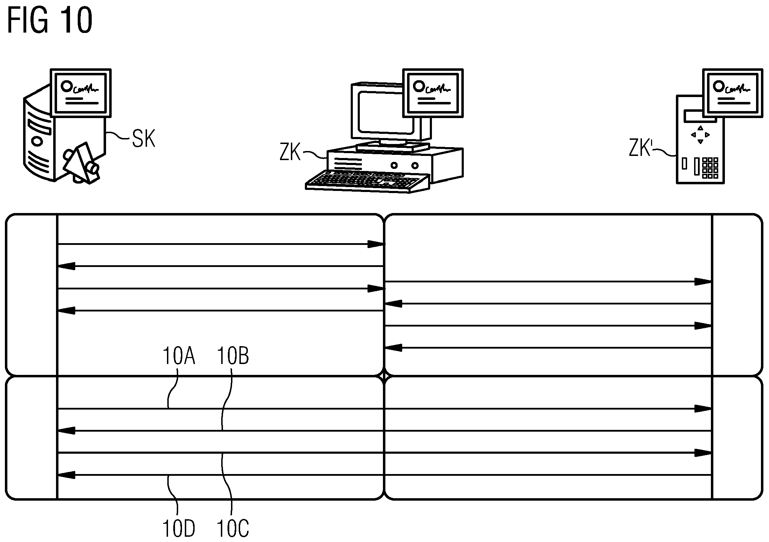

Figur 10 zeigt ein Sequenzdiagramm eines Verfahrens zur sicheren Übertragung von Daten gemäß einer Ausführungsform der vorliegenden Erfindung. Hierzu erfolgt an einem Nachrichtenaustausch ein Übermitteln einer Nachricht 10A, welche mittels des MMS Protokolls wie folgt beschrieben werden kann:
AARQ PDU1 (command, cryptotoken, signed, DHset)

In der vorliegenden Ausführungsform kann einem Handshake eine Diffie-Hellman-Schlüsseletablierung genutzt werden. Hierzu kann es notwendig sein, den Parameter DHset von der Startkomponente SK an die Zielkomponente ZK' zu übermitteln. In einem darauffolgenden Nachrichtenaustausch wird eine Nachricht 10B übermittelt, welche dem MMS Protokoll wie folgt dargestellt werden kann:
AARE PDU2 (ACK, Cryptotoken, signed, DHset)

Daraufhin erfolgt mittels der Nachricht 10C ein Übermitteln eines Methodenaufrufs, welcher mittels des MMS Protokolls wie folgt dargestellt werden kann:
AAQ PDU3 (command, Cryptotoken, keyed Hash)

Daraufhin erfolgt ein Generieren und Übermitteln der Nachricht 10D, welche mittels des MMS Protokolls wie folgt dargestellt werden kann:
AARE PDU4 (ACK, Cryptotoken, keyed Hash)

Bei dieser Ausführungsform handelt es sich um ein kombiniertes Ausführen der bereits beschriebenen Vorgehensweisen, wie sie in der Figur 9 und der Figur 8 beschrieben sind. Vorteilhaft ist hierbei, dass weniger Rechenaufwand benötigt wird, da eine wiederholte Verifikation einer Signatur hierbei entfallen kann. Besonders vorteilhaft ist bei der in Figur 10 beschriebenen Ausführungsform, dass ein neuer Schlüssel für jede Sitzung des Austauschens der Daten erzeugt wird.

Somit ist in der vorliegenden Ausführungsform gemäß Figur 10 eine Nachrichtenintegrität basierend auf einem Schlüsselpaar und einer digitalen Signatur für einen ersten Handshake, gewährleistet.

In einer weiteren Ausführungsform des Verfahrens zum sicheren Übermitteln von Daten gemäß der vorliegenden Erfindung wird ein hybrider Ansatz von H.235.3, was ein Verfahren der Nachrichtentechnik beschreibt, erfolgt. Hier kann im ersten Handshake eine Diffie-Hellman-Schlüsseletablierung genutzt werden, die mit dem asymmetrischen Schlüsselmaterial digital signiert wird. Dieser Ansatz geht von einem asymmetrischen Schlüsselpaar aus. Vorzugsweise kann dieser Handshake in den AARQ und AARE Nachrichten realisiert werden. Mit dem so etablierten Shared Key, kann dann im Anschluss ein Integritätsschutz für die Nachrichten innerhalb der Sitzung realisiert werden. Dieser kann mittels HMAC realisiert werden.

Figur 11 zeigt einen möglichen Nachrichtenaufbau einer Nachricht, welche in einer Ausführungsform des erfindungsgemäßen Verfahrens zum sicheren Übertragen von Daten Anwendung finden kann. Bei der in der Figur 11 gezeigten Nachricht, kann es sich um eine erweiterte MMS Nachricht handeln, welche mittels eines Cryptotokens 113 und/oder einer Prüfsumme, zum Beispiel einer MAC 114 erweitert wird. Die Nachricht weist einen IP Header 110, einen UDP/TCP Header 111, eine MMS Payload 112, einen Cryptotoken 113 und/oder einen MAC 114 auf. Bei der MMS Payload 112 kann es sich um eine Nutzlast handeln. Auf Anwendungsebene kann auch die MMS Payload 115, das Cryptotoken 113 und der MAC 114 als Nutzlast bezeichnet werden, was mittels des Pfeils 115 dargestellt ist.

In dem in der Figur 11 beschriebenen Nachrichtenaufbau erfolgt unter Benutzung von Cryptotoken eine Kapselung der notwendigen Informationen zum Durchführen des Verfahrens. Ein Cryptotoken 113 kapselt alle notwendigen kryptographischen Informationen und kann damit in alle Nachrichten gleichermaßen eingefügt werden. Der MAC 114 am Ende der Nachricht ermöglicht die Integritätsprüfung der Nutzlast. Eine mögliche Definition eines Cryptotokens 113 für den Transport der notwendigen kryptographischen Informationen kann als ASN.1 Baum dargestellt werden. Ein Beispiel hierfür ist in der Figur 12 gezeigt.

Das Cryptotoken 113 kann zum Beispiel eine Nonce-Information aufweisen. Mittels des vorgestellten Nachrichtenaufbaus kann eine Integrität der MMS Payload 112 und/oder des Cryptotokens 113 sichergestellt werden, was in der vorliegenden Figur 11 mittels des Pfeils 116 gezeigt ist.

Figur 12 zeigt in schematischer Form den Aufbau eines Cryptotokens. Ein Cryptotoken kann beispielsweise mittels des folgenden Quellcodes beschrieben werden.

```
     cryptoToken ::= SEQUENCE -- General purpose/application
     specific token
      {
                      tokenOID OBJECT IDENTIFIER,
                      TokenVals ClearToken,
                      token HASHED OPTIONAL,
                      token signed OPTIONAL
     ClearToken ::= SEQUENCE -- a "token" may contain mul-
     tiple value types.
      {
           tokenOID OBJECT IDENTIFIER,
           certificate TypedCertificate OPTIONAL,
           timeStamp TimeStamp OPTIONAL,
           SeqenceNumber SequenceNumber OPTIONAL,
           random RandomVal OPTIONAL,
          dhkey DHset OPTIONAL,
           receiverID Identifier OPTIONAL,
           sendersID Identifier OPTIONAL
      }
     HASHED ::= SEQUENCE
      {
           algorithmOID OBJECT IDENTIFIER,
           paramS Params, -- any "runtime" pa-
           rameters
          hash BIT STRING
      }
     signed ::= SEQUENCE
      {
           algorithmOID OBJECT IDENTIFIER,
           paramS Params, -- any "runtime"
          parameters
           signature BIT STRING
      }
     DHset ::= SEQUENCE
      {
              Halfkey BIT STRING (SIZE(0..2048)), --
              = g^x mod n
              Midsize BIT STRING (SIZE(0..2048)), --
 n
              generator BIT STRING (SIZE(0..2048)), -- g
      }
```

Das in der Figur 12 gezeigte Cryptotoken 120 kann beispielsweise dem in Figur 11 gezeigten Cryptotoken 113 entsprechen.

Im vorliegenden Ausführungsbeispiel kann das Cryptotoken 120 ein TokenOID 121, ein Clear Token 122, einen Hashed-Datentyp 123 und/oder einen Signed-Datentyp 124 aufweisen. Zum intuitiveren Verständnis sei im Folgenden eine Tabelle der Bezeichnungen der Bezugszeichen gegeben:

| | |
|---|---|
| 120 | cryptoToken |
| 121 | tokenOID |
| 122 | ClearToken |
| 123 | HASHED |
| 124 | signed |
| 1221 | tokenOID |
| 1222 | certificate |
| 1223 | dhkey |
| 1224 | timeStamp |
| 1225 | Sequence Number |
| 1226 | random |
| 1227 | receiver ID |
| 1228 | senders ID |
| 1231 | algorithmOID |
| 1232 | paramS = NULL |
| 1233 | hash |
| 1241 | algorithmOID |
| 1242 | paramS = NULL |
| 1243 | signature |

## Patentansprüche

1. Verfahren zum sicheren Übertragen von Daten (D), mit den Schritten:
- Bereitstellen (100) von Datenverbindungen (DV) von unterschiedlichen Startkomponenten (SK) über jeweils mindestens eine Zwischenkomponente (ZK) zu einer gemeinsamen Zielkomponente (ZK');
- Zusammenfassen (101) von Zwischenkomponenten (ZK) in Abhängigkeit einer kryptographischen Information (KI) zu einer zusammengefassten Zwischenkomponente mittels mindestens eines Nachrichtenaustausches durch eine Zusammenfassungseinheit (3), wobei die kryptographische Information (KI) ein generiertes Token und/oder eine Nonce-Information ist, und wobei ausgehandelt wird, welche der Zwischenkomponenten (ZK) zusammengefasst werden; und
- Übertragen (102) der Daten (D) von den Startkomponenten (SK) über die zusammengefasste Zwischenkomponente (ZK) zu der Zielkomponente (ZK'), wobei
das Zusammenfassen (101) der Zwischenkomponenten (ZK) mittels mindestens eines Routings derart durchgeführt wird, dass aus den Zwischenkomponenten (ZK) genau eine Zwischenkomponente (ZK) ausgewählt wird und diese ausgewählte Zwischenkomponente (ZK) mittels der Netzwerkadressen der nicht ausgewählten Zwischenkomponenten (ZK) angesprochen wird.

2. Verfahren nach Anspruch 1, wobei die unterschiedlichen Startkomponenten (SK), die Zwischenkomponenten (ZK) und/oder die Zielkomponente (ZK') in einem Automatisierungsnetz vorgesehen sind.

3. Verfahren nach Anspruch 1 oder 2, wobei das Übertragen (102) der Daten (D) mittels eines erweiterten Multimedia-Messaging-Service-Protokolls durchgeführt wird.

4. Verfahren nach Anspruch 3, wobei der Nachrichtenaustausch zwischen den unterschiedlichen Startkomponenten (SK), den Zwischenkomponenten (ZK) und/oder der Zielkomponente (ZK') durchgeführt wird.

5. Verfahren nach Anspruch 3 oder 4, wobei der Nachrichtenaustausch mindestens ein symmetrisches und/oder asymmetrisches Kryptographieverfahren implementiert.

6. Verfahren nach einem der Ansprüche 3 bis 5, wobei der Nachrichtenaustausch gemäß einem Shared-Key-Verfahren, einem http-Digest-Authentication-Verfahren, einem Challenge-Response-Verfahren, einem Keyed-Hash-Verfahren, einer Hash-Funktion, einem Diffie-Hellman-Verfahren und/oder einem digitalem Signatur-Verfahren durchgeführt wird.

7. Verfahren nach einem der Ansprüche 3 bis 6, wobei mindestens eine ausgetauschte Nachricht (70; 71; 72, 73; 80; 81; 82; 83; 90; 91; 92; 93; 10A; 10B; 10C; 10D) einen Hinweis auf eine Nonce-Information, eine Zufallszahl, eine Pseudozufallszahl, einen Befehl, eine Identität eines Absenders, eine Identität eines Empfängers, einen Zeitstempel und/oder eine Sequenznummer aufweist.

8. Verfahren nach einem der Ansprüche 3 bis 7, wobei mindestens eine ausgetauschte Nachricht (70; 71; 72, 73; 80; 81; 82; 83; 90; 91; 92; 93; 10A; 10B; 10C; 10D) die kryptographische Information aufweist.

9. Verfahren nach einem der Ansprüche 3 bis 8, wobei mindestens eine ausgetauschte Nachricht (70; 71; 72, 73; 80; 81; 82; 83; 90; 91; 92; 93; 10A; 10B; 10C; 10D) eine Prüfsumme aufweist.

10. Verfahren nach einem der Ansprüche 3 bis 9, wobei der Nachrichtenaustausch in Abhängigkeit eines Verschlüsselungsprotokolls ausgeführt wird.

11. Verfahren nach einem der Ansprüche 1 bis 10, wobei das Zusammenfassen (101) der Zwischenkomponenten (ZK) ferner mittels mindestens eines Zuweisens von Netzwerkadressen, eines Anwendens eines Sitzungsprotokolls, eines Aufbauens einer gesicherten Datenverbindung (DV), eines Übermittelns eines Befehls, eines Übermittelns einer kryptographischen Information (KI) und/oder eines Übermittelns einer Bestätigungsnachricht durchgeführt wird.

12. Vorrichtung (1) zur sicheren Übertragung von Daten (D), insbesondere zur Durchführung des Verfahrens gemäß Ansprüche 1 bis 11, mit:
- einer Bereitstellungseinheit (2) zum Bereitstellen von Datenverbindungen (DV) von unterschiedlichen Startkomponenten (SK) über jeweils mindestens eine Zwischenkomponente (ZK) zu einer gemeinsamen Zielkomponente (ZK');
- einer Zusammenfassungseinheit (3) zum Zusammenfassen von Zwischenkomponenten (ZK) in Abhängigkeit einer kryptographischen Information (KI) zu einer zusammengefassten Zwischenkomponente mittels mindestens eines Nachrichtenaustausches zum Aushandeln, welche der Zwischenkomponenten (ZK) zusammengefasst werden), wobei die kryptographische Information (KI) ein generiertes Token und/oder eine Nonce-Information ist; und
- einer Übertragungseinheit (4) zum Übertragen der Daten (D) von den Startkomponenten (SK) über die zusammengefasste Zwischenkomponente (ZK) zu der Zielkomponente (ZK'), wobei die Zusammenfassungseinheit (3) das Zusammenfassen (101) der Zwischenkomponenten (ZK) mittels mindestens eines Routings derart durchgeführt, dass die Zusammenfassungseinheit (3) aus den Zwischenkomponenten (ZK) genau eine Zwischenkomponente (ZK) auswählt und diese ausgewählte Zwischenkomponente (ZK) mittels der Netzwerkadressen der nicht ausgewählten Zwischenkomponenten (ZK) angesprochen wird.

13. Computerprogrammprodukt, welches die Durchführung eines Verfahrens gemäß einem der Ansprüche 1 bis 11 veranlasst.

14. Datenspeicher, der das Computerprogrammprodukt gemäß Anspruch 13 speichert.

## Claims

1. Method for secure transmission of data (D), comprising the steps:
- provision (100) of data connections (DV) from different start components (SK) via at least one intermediate component (ZK) to a common target component (ZK'), in each case;
- grouping together (101) intermediate components (ZK), dependent upon an item of cryptographic information (KI), to one grouped-together intermediate component by means of at least one message exchange by a grouping unit (3), wherein the cryptographic information (KI) is a generated token and/or an item of Nonce Information, and wherein it is negotiated which of the intermediate components (ZK) are grouped together; and
- transmitting (102) the data (D) from the start components (SK) via the grouped intermediate component (ZK) to the target component (ZK'), wherein
the grouping together (101) of the intermediate components (ZK) is carried out by means of at least one routing operation such that from the intermediate components (ZK) precisely one intermediate component (ZK) is selected and said selected intermediate component (ZK) is addressed by means of the network addresses of the non-selected intermediate components (ZK) .

2. Method according to claim 1, wherein the different start components (SK), the intermediate components (ZK) and/or the target component (ZK') are provided in an automation network.

3. Method according to claim 1 or 2, wherein the transmission (102) of the data (D) is carried out by means of an extended Multimedia Messaging Service protocol.

4. Method according to claim 3, wherein the message exchange is carried out between the different start components (SK), the intermediate components (ZK) and/or the target components (ZK').

5. Method according to claim 3 or 4, wherein the message exchange implements at least one symmetrical and/or asymmetrical cryptographic method.

6. Method according to one of claims 3 to 5, wherein the message exchange is carried out according to a Shared Key process, an http-Digest Authentication process, a Challenge-Response process, a Keyed Hash process, a Hash Function, a Diffie-Hellman process and/or a digital signature process.

7. Method according to one of claims 3 to 6, wherein at least one exchanged message (70; 71; 72, 73; 80; 81; 82; 83; 90; 91; 92; 93; 10A; 10B; 10C; 10D) comprises a reference to an item of Nonce Information, a random number, a pseudo-random number, a command, an identity of a sender, an identity of a receiver, a time stamp and/or a sequence number.

8. Method according to one of claims 3 to 7, wherein at least one exchanged message (70; 71; 72, 73; 80; 81; 82; 83; 90; 91; 92; 93; 10A; 10B; 10C; 10D) contains the cryptographic information.

9. Method according to one of claims 3 to 8, wherein at least one exchanged message (70; 71; 72, 73; 80; 81; 82; 83; 90; 91; 92; 93; 10A; 10B; 10C; 10D) contains a checksum.

10. Method according to one of claims 3 to 9, wherein the message exchange is carried out dependent on an encryption protocol.

11. Method according to one of claims 1 to 10, wherein the grouping together (101) of the intermediate components (ZK) is further carried out by means of at least one allocation of network addresses, an application of a session protocol, the establishment of a secure data connection (DV), transmission of a command, transmission of an item of cryptographic information (KI) and/or transmission of a confirmation message.

12. Device (1) for secure transmission of data (D), particularly for carrying out the method according to claims 1 to 11, comprising:
- a provision unit (2) for providing data connections (DV) from different start components (SK) via at least one intermediate component (ZK) in each case to a common target component (ZK');
- a grouping unit (3) for grouping together intermediate components (ZK), dependent upon an item of cryptographic information (KI), to one grouped-together intermediate component by means of at least one message exchange for negotiating which of the intermediate components (ZK) are grouped together, wherein the cryptographic information (KI) is a generated token and/or an item of Nonce Information; and
- a transmission unit (4) for transmitting the data (D) from the start components (SK) via the grouped together intermediate components (ZK) to the target component (ZK'),
wherein the grouping unit (3) carries out the grouping together (101) of the intermediate components (ZK) by means of at least one routing operation such that the grouping unit (3) selects from the intermediate components (ZK) precisely one intermediate component (ZK) and said selected intermediate component (ZK) is addressed by means of the network addresses of the non-selected intermediate components (ZK).

13. Computer program product which instigates the performance of a method according to one of claims 1 to 11.

14. Data store which stores the computer program product according to claim 13.

## Revendications

1. Procédé pour la transmission sécurisée de données (D), comprenant les étapes suivantes :
- fourniture (100) de liaisons de données (DV) de différents composants de départ (SK) par le biais d'au moins un composant intermédiaire (ZK) respectif vers un composant cible (ZK') commun ;
- regroupement (101) de composants intermédiaires (ZK) en fonction d'une information chiffrée (KI) en un composant intermédiaire regroupé au moyen d'au moins un échange de messages par une unité de regroupement (3), dans lequel l'information chiffrée (KI) est un jeton d'authentification généré et/ou une information créée pour l'occasion, et dans lequel il est traité desquels des composants intermédiaires (ZK) sont regroupés ; et
- transmission (102) des données (D) des composants de départ (SK) par le biais du composant intermédiaire regroupé (ZK) vers le composant cible (ZK'), dans lequel
le regroupement (101) des composants intermédiaires (ZK) est exécuté au moyen d'au moins un routage de telle façon que précisément un composant intermédiaire (ZK) est sélectionné parmi les composants intermédiaires (ZK) et ce composant intermédiaire (ZK) sélectionné est adressé au moyen des adresses réseau des composants intermédiaires (ZK) non sélectionnés.

2. Procédé selon la revendication 1, dans lequel les différents composants de départ (SK), les composants intermédiaires (ZK) et/ou le composant cible (ZK') sont prévus dans un réseau d'automatisation.

3. Procédé selon la revendication 1 ou 2, dans lequel la transmission (102) des données (D) est exécutée au moyen d'un protocole étendu de service de messagerie multimédia.

4. Procédé selon la revendication 3, dans lequel l'échange de données est effectué entre les différents composants de départ (SK), les composants intermédiaires (ZK) et/ou le composant cible (ZK').

5. Procédé selon la revendication 3 ou 4, dans lequel l'échange de données met en oeuvre au moins un procédé de chiffrage symétrique et/ou asymétrique.

6. Procédé selon l'une des revendications 3 à 5, dans lequel l'échange de données est exécuté selon un procédé shared key, un procédé http digest authentication, un procédé challenge response, un procédé keyed hash, une fonction hash, un procédé Diffie-Hellman et/ou un procédé de signature numérique.

7. Procédé selon l'une des revendications 3 à 6, dans lequel au moins un message échangé (70 ; 71 ; 72, 73 ; 80 ; 81 ; 82 ; 83 ; 90 ; 91 ; 92 ; 93 ; 10A ; 10B ; 10C ; 10D) présente une indication d'une information créée pour l'occasion, un nombre aléatoire, un nombre pseudo-aléatoire, une commande, une identité d'un émetteur, une identité d'un destinataire, un horodatage et/ou un numéro de séquence.

8. Procédé selon l'une des revendications 3 à 7, dans lequel au moins un message échangé (70 ; 71 ; 72, 73 ; 80 ; 81 ; 82 ; 83 ; 90 ; 91 ; 92 ; 93 ; 10A ; 10B ; 10C ; 10D) présente l'information chiffrée.

9. Procédé selon l'une des revendications 3 à 8, dans lequel au moins un message échangé (70 ; 71 ; 72, 73 ; 80 ; 81 ; 82 ; 83 ; 90 ; 91 ; 92 ; 93 ; 10A ; 10B ; 10C ; 10D) présente une somme de contrôle.

10. Procédé selon l'une des revendications 3 à 9, dans lequel l'échange de données est exécuté en fonction d'un protocole d'encodage.

11. Procédé selon l'une des revendications 1 à 10, dans lequel le regroupement (101) des composants intermédiaires (ZK) est exécuté au moyen d'au moins une attribution d'adresses réseau, une application d'un protocole de session, un établissement d'une liaison de données (DV) sécurisée, une transmission d'une commande, une transmission d'une information chiffrée (KI) et/ou une transmission d'un message de confirmation.

12. Dispositif (1) pour la transmission sécurisée de données (D), en particulier pour exécuter le procédé selon les revendications 1 à 11, comprenant :
- une unité de fourniture (2) pour fournir des liaisons de données (DV) de différents composants de départ (SK) par le biais d'au moins un composant intermédiaire (ZK) respectif vers un composant cible (ZK') commun ;
- une unité de regroupement (3) pour regrouper des composants intermédiaires (ZK) en fonction d'une information chiffrée (KI) en un composant intermédiaire regroupé au moyen d'au moins un échange de messages, pour traiter desquels des composants intermédiaires (ZK) sont regroupés, dans lequel l'information chiffrée (KI) est un jeton d'authentification généré et/ou une information créée pour l'occasion ; et
- une unité de transmission (4) pour transmettre des données (D) des composants de départ (SK) par le biais du composant intermédiaire regroupé (ZK) vers le composant cible (ZK'), dans lequel
l'unité de regroupement (3) exécute le regroupement (101) des composants intermédiaires (ZK) au moyen d'au moins un routage de telle façon que l'unité de regroupement (3) sélectionne précisément un composant intermédiaire (ZK) parmi les composants intermédiaires (ZK) et ce composant intermédiaire (ZK) sélectionné est adressé au moyen des adresses réseau des composants intermédiaires (ZK) non sélectionnés.

13. Produit de programme informatique qui déclenche l'exécution du procédé selon l'une des revendications 1 à 11.

14. Mémoire de données qui conserve en mémoire le produit de programme informatique selon la revendication 13.
